# FASCICULE DE BREVET EUROPEEN

(11) **EP 0 685 330 B1**
(45) Date de publication et mention de la délivrance du brevet: **08.05.2002**
(21) Numéro de dépôt: 95401286.0
(22) Date de dépôt: 01.06.1995
(51) Int. Cl.: B32B 17/10, C08K 5/00, C08K 5/54, C03C 27/12

(54) **Film intercalaire résistant au feu et son utilisation dans un verre feuilleté**
Feuersichere Zwischenschichtfolie und seine Anwendung in eine Verbundglasscheibe
Fire resistant interlayer film and its application in a laminated glass

(30) Priorité: 02.06.1994 FR 9406772
(43) Date de publication de la demande: 06.12.1995
(73) Titulaire: SAINT-GOBAIN GLASS FRANCE, 92400 Courbevoie (FR)
(72) Inventeur: Dages, Daniel, F-78130 Les Mureaux (FR)
(74) Mandataire: Le Vaguerèse, Sylvain Jacques

(56) Documents cités:
- EP-A- 0 098 961
- EP-A- 0 227 470
- EP-A- 0 389 291
- EP-A- 0 393 006
- WO-A-90/11324
- DATABASE WPI Week 9310 Derwent Publications Ltd., London, GB; AN 93-80436 & JP-A-05 025 213 (SEKISUI CHEM IND CO LTD)

## Description

La présente invention concerne un film intercalaire résistant au feu et son utilisation dans un feuilleté, notamment un verre feuilleté.

Les verres feuilletés sont couramment utilisés dans le bâtiment et dans les moyens de transport comme vitrages présentant des caractéristiques de « protection sécurité » et permettant de réduire la probabilité des sinistres par choc. Les plus simples et les plus connus de ces verres feuilletés consistent en deux ou plusieurs feuilles de verre collées entre elles par un ou plusieurs films intercalaires de polyvinylbutyral (PVB) plastifié. De telles structures sont efficaces contre les chocs mais peuvent se révéler insuffisantes en matière de protection sécurité en cas d'incendie. Si l'éclatement ou l'affaissement du verre sont toujours évoqués en premier lieu dans ce genre de situation, il convient néanmoins de remarquer que le véritable premier problème de ces verres feuilletés vient du film intercalaire de PVB plastifié qui se ramollit et fond bien plus rapidement que le verre et qui, de ce fait, en cas d'éclatement du verre, cesse également très tôt d'assurer le maintien des éclats de verre par collage. Le PVB plastifié fondu s'écoule ensuite hors du vitrage avant de s'enflammer avec de forts dégagements de chaleur et de fumées, ceci bien avant le début de ramollissement du verre. Le ramollissement rapide du PVB plastifié, I'écoulement du PVB plastifié brûlant, le dégagement de fumées et l'inflammation du PVB plastifié constituent autant de dangers auxquels il est nécessaire de remédier dans ce type de vitrage préalablement à toute autre chose.

Il convient de noter, en fait, que la plupart des vitrages feuilletés aptes à résister au feu actuellement existants ne présentent pas la structure simple et économique précédemment mentionnée et s'affranchissent de ce fait des problèmes liés à cette structure. Selon les cas, ces vitrages feuilletés anti-feu utilisent d'autres films intercalaires que le PVB plastifié ou utilisent des éléments intercalaires additionnels, ces autres films ou ces éléments ayant et/ou conférant au vitrage les propriétés de résistance au feu recherchées.

Notamment, parmi les vitrages feuilletés résistant au feu connus comportant d'autres films intercalaires que le PVB plastifié, il convient de citer les vitrages feuilletés comprenant deux ou plusieurs feuilles de verre assemblées entre elles par l'intermédiaire d'un gel ou d'un film silicone. Ainsi, le brevet FR 2 346 548 décrit un vitrage feuilleté anti-feu dans lequel le film intercalaire est un gel comportant un liquide à chaleur de vaporisation élevée tel que l'eau et une substance susceptible de former une mousse isolante sous l'effet d'un rayonnement thermique. Ce vitrage, conçu de façon à satisfaire le plus grand nombre de critères de résistance au feu et classé de ce fait dans les « éléments coupe feu », présente cependant une résistance au gel et aux chocs plus faible qu'un vitrage feuilleté traditionnel utilisant un film intercalaire de PVB plastifié et son épaisseur est également plus importante.

Un autre exemple de vitrage présentant des propriétés anti-feu particulièrement bonnes est donné dans la demande de brevet FR 2 394 394 décrivant un vitrage feuilleté comportant deux feuilles de verre entre lesquelles se trouve un film intercalaire d'élastomère de silicone. L'inconvénient majeur de ce produit est son prix extrêmement élevé par rapport au prix d'un feuilleté traditionnel utilisant un film intercalaire de PVB plastifié.

Plusieurs vitrages feuilletés utilisant des films intercalaires de PVB ainsi que des éléments intercalaires additionnels présentant et/ou conférant auxdits vitrages des propriétés de résistance au feu peuvent également être cités. Ainsi le brevet US 5 219 630 décrit un vitrage présentant un film intercalaire, qui peut être un film de PVB, dans lequel se trouve inséré un réseau de fils métalliques ayant pour objet de retarder l'affaissement de l'intercalaire et du vitrage. Cependant, outre le fait qu'un tel réseau est visible, un moyen de ce genre ne permet pas véritablement de ralentir la fonte de l'intercalaire et n'empêche ni son écoulement final ni son inflammation à partir d'une certaine température. Des vitrages feuilletés dans lesquels des couches de matériau jouant un rôle d'isolant thermique en cas d'incendie sont insérées entre chaque face du film intercalaire de PVB et les feuilles de verre adjacentes sont également décrits dans des brevets tels que le brevet US 4 071 649. Une telle structure de film intercalaire à trois couches distinctes est cependant plus complexe qu'un simple film intercalaire de PVB plastifié et conduit également à des vitrages plus épais. Cette structure n'empêche par ailleurs pas l'écoulement final du PVB ni son inflammation même si elle retarde l'accomplissement de ces deux événements.

Un dernier exemple de vitrage feuilleté apte à résister au feu existant actuellement et ne pouvant être classé véritablement parmi l'une ou l'autre des deux catégories précitées (film intercalaire autre que le PVB - éléments intercalaires additionnels) est donné dans le brevet EP 227 633. Ce brevet propose de mélanger au PVB utilisé pour réaliser l'intercalaire d'un vitrage feuilleté une quantité non négligeable d'un mélange plastifiant particulier composé de divers additifs présentant différentes fonctions, de façon à obtenir un film intercalaire de PVB plastifié, de composition modifiée apte à réagir en cas d'incendie pour résister au feu. Le mélange d'additifs ajoutés au PVB dans ce brevet est cependant complexe et oblige à réaliser un PVB plastifié particulier en vue de la réalisation d'un vitrage feuilleté présentant une résistance au feu.

De façon générale, il convient de remarquer que les vitrages feuilletés conçus pour résister au feu présentent des structures plus complexes et/ou sont plus coûteux (car nécessitant notamment la mise au point de films intercalaires spéciaux de composition spécifique ou comportant plusieurs couches) que les vitrages feuilletés traditionnels utilisant des films intercalaires courants de PVB plastifié. En outre, leurs propriétés de résistance aux chocs sont souvent moins bonnes que celles desdits vitrages feuilletés traditionnels.

L'objet de la présente invention est donc de trouver une solution simple et économique au problème de l'écoulement des films intercalaires de PVB plastifié hors des verres, notamment des vitrages, feuilletés en cas d'augmentation importante de température, de façon à fournir des verres feuilletés, notamment des vitrages, simples et économiques, présentant à la fois une bonne résistance aux chocs et une résistance améliorée au feu, ces verres feuilletés permettant de surcroît, dans leur fonction habituelle d'éclairage, une transmission maximale de la lumière.

Plus précisément, l'objet de la présente invention est de mettre au point un intercalaire transparent, résistant au feu et dont la composition de base est une composition de PVB plastifié traditionnelle, cet intercalaire pouvant être obtenu à partir d'intercalaires de PVB plastifié courants, pouvant être mis en oeuvre selon des procédés habituels et pouvant être avantageusement utilisé dans la réalisation de feuilletés, notamment des verres feuilletés susmentionnés.

Ces buts sont atteints grâce à un film intercalaire en polyvinylbutyral plastifié comprenant un agent de réticulation apte à rendre le polyvinylbutyral plastifié très peu fusible ou infusible.

L'invention concerne également des feuilletés, notamment des verres feuilletés, comprenant au moins deux feuilles rigides de matière inorganique et au moins un film intercalaire de matière organique tel que précédemment défini.

L'invention concerne également les procédés de fabrication du film intercalaire et des feuilletés précédemment mentionnés.

Par « agent de réticulation apte à rendre le PVB plastifié très peu fusible ou infusible », on entend un composé permettant, sous certaines conditions (généralement sous l'effet de la chaleur, comme explicité ultérieurement), la création de suffisamment de liaisons au sein du PVB plastifié pour le rendre très peu fusible ou infusible, notamment en restreignant la liberté des chaînes de PVB, et empêcher, ainsi, son écoulement à haute température. Par « création de liaisons au sein du PVB », on entend entre autres la création de liaisons pontales (intermoléculaires) entre les chaînes de PVB (liaisons de réticulation proprement dites) et/ou la formation d'un enchevêtrement de réseaux polymères interpénétrés suite, notamment, à la polymérisation de l'agent de réticulation au sein du PVB plastifié.

Par « PVB plastifié très peu fusible ou infusible », on entend un PVB plastifié ne coulant pas quelle que soit la température. Un tel PVB est éventuellement susceptible de ramollir (PVB plastifié très peu fusible) sans toutefois devenir suffisamment liquide pour couler.

Il apparaît que le film intercalaire, au sein duquel le PVB plastifié a été rendu très peu fusible ou infusible suite à l'action de l'agent de réticulation, présente une résistance fortement accrue au feu. Son ramollissement éventuel, après l'action de l'agent de réticulation sur le PVB plastifié, s'opère à des températures bien plus élevées que les températures de ramollissement des films de PVB plastifié traditionnellement utilisés (ces dernières températures étant généralement inférieures à 150°C environ) et, de plus, ce film de PVB plastifié, rendu très peu fusible ou infusible utilisé dans des feuilletés ne s'écoule pas à partir d'une certaine température ni ne s'enflamme mais conserve son intégrité avant de se décomposer, sa décomposition intervenant à des températures supérieures à 250°C, généralement supérieures à 300°C. Par ailleurs, l'utilisation, dans des verres feuilletés, de films intercalaires de PVB plastifié rendu très peu fusible ou infusible par l'action de l'agent de réticulation n'empêche pas l'obtention de verres feuilletés transparents présentant de bonnes qualités optiques, les propriétés de résistance aux chocs desdits verres feuilletés étant toutes aussi satisfaisantes que les propriétés de résistance aux chocs des verres feuilletés utilisant des films intercalaires habituels de PVB plastifié.

De préférence, l'agent de réticulation présent dans le film intercalaire selon l'invention comprend au moins deux fonctions susceptibles de réagir avec les groupements hydroxyles du PVB et/ou est apte à former un réseau interpénétré avec le PVB plastifié, notamment en polymérisant. Cet agent de réticulation est choisi de façon à réagir au sein du film intercalaire sous l'effet de la chaleur et/ou d'un catalyseur également présent dans ce cas dans le film intercalaire, ou éventuellement sous l'effet d'un traitement autre que thermique. De préférence, l'agent de réticulation est choisi de façon à réagir, sous l'action de la chaleur, sur le PVB plastifié pour le rendre très peu fusible ou infusible, à partir de températures comprises entre 100°C et la température à laquelle le PVB plastifié utilisé est susceptible de couler (le PVB plastifié commençant à couler, généralement, à partir de 180°C), avantageusement à partir de températures comprises entre la température de ramollissement du PVB plastifié seul ou une température légèrement inférieure (par exemple 120°C pour une température de ramollissement de 140°C) et la température à laquelle le PVB plastifié seul commence à couler, de préférence à partir de températures comprises entre 120 et 170°C environ. Le choix d'un agent de réticulation réagissant sur le PVB plastifié à partir de températures comprises entre la température de ramollissement du PVB plastifié ou une température légèrement inférieure et la température à laquelle celui-ci commence à couler présente plusieurs avantages au niveau du procédé de réalisation du film intercalaire selon l'invention et du procédé de réalisation des feuilletés à partir de ce film, comme explicité ultérieurement. Le film intercalaire comprenant ledit agent présente notamment l'avantage de garder son intégrité (c'est-à-dire de ne pas couler) pour toute température inférieure à sa température de décomposition.

Selon une forme de réalisation particulièrement avantageuse de l'invention, le film intercalaire comprend comme agent de réticulation des alkoxysilanes hydrolysables présentant au moins deux fonctions réactives, de préférence des dialkoxysilanes et/ou des trialkoxysilanes et/ou des tétraalkoxysilanes. Les dialkoxysilanes et trialkoxysilanes sont habituellement utilisés comme agents de couplage pour favoriser l'adhésion du verre et des polymères car ils réagissent généralement à la fois avec la surface du verre et avec les polymères. Cependant, le PVB possède des groupements hydroxyles réagissant directement avec la surface du verre et ne nécessite pas le recours à de tels agents pour adhérer de façon suffisante au verre placé à son contact. Le PVB plastifié est ainsi traditionnellement utilisé comme intercalaire dans les verres feuilletés sans ajout d'alkoxysilanes.

Dans le cas présent, il convient de remarquer que l'ajout d'alkoxysilanes tels que précédemment définis ne conduit pas nécessairement à l'amélioration de l'adhésion entre le verre et le PVB plastifié mais conduit à la création de liaisons au sein du PVB (plutôt qu'en surface) permettant de rendre le PVB infusible ou très peu fusible, les groupements hydroxyles du PVB non utilisés pour l'adhésion du PVB pouvant servir de points d'accrochage pour un pontage avec lesdits alkoxysilanes et lesdits alkoxysilanes pouvant s'hydrolyser pour donner des polysiloxanes se mêlant aux chaînes de PVB plastifié de façon à former un réseau interpénétré.

Les alkoxysilanes hydrolysables présentant au moins deux fonctions réactives et utilisables comme agent de réticulation selon l'invention peuvent consister en tout type d'alkoxysilanes, notamment en des aminosilanes, époxysilanes, vinylsilanes, phénylsilanes ou alkylsilanes possédant 2 ou 3 groupements alkoxy identiques ou différents, tels que des groupements méthoxy, éthoxy, méthacryloxy ou glycidoxy, ou en des silanes modifiés présentant un ou des groupements tels que le phosphore ou le brome et possédant 2 ou 3 groupements alkoxy identiques ou différents tels que ceux mentionnés précédemment, ou éventuellement en des silanes présentant 4 groupements alkoxy identiques ou différents tels que ceux mentionnés précédemment.

Selon d'autres formes de réalisation de l'invention, le film intercalaire peut comprendre, comme agent de réticulation, des amines, des isocyanates bloqués ou des époxy, ces formes de réalisation de l'invention étant cependant moins avantageuses et moins faciles à mettre en oeuvre.

Le film intercalaire selon l'invention peut être réalisé de différentes façons. L'agent de réticulation étant un agent extérieur au PVB apte à réagir sur le PVB déjà synthétisé, est à distinguer des composants de synthèse du PVB et est ajouté de la façon la plus simple et avantageuse sur du PVB courant déjà synthétisé. De préférence, l'agent de réticulation est déposé à la surface d'un film de PVB plastifié réalisé selon des méthodes connues de l'homme du métier notamment par extrusion ou pressage.

Ainsi, selon un mode de réalisation particulièrement avantageux du film intercalaire selon l'invention, un film intercalaire de PVB plastifié courant est simplement trempé dans un bain de l'agent de réticulation selon l'invention, cet agent étant pur ou dilué dans un solvant approprié. Par exemple, lorsque l'agent de réticulation consiste en des alkoxysilanes, ces alkoxysilanes peuvent être utilisés purs ou dilués dans un alcool, par exemple l'isopropanol ou le méthanol, dans un mélange eau-alcool, par exemple un mélange eau-isopropanol, ou dans un autre solvant ne constituant pas un solvant du PVB, par exemple un alcane tel que l'heptane ou l'octane. Ils peuvent également être hydrolysés avant d'être mis au contact avec le PVB de façon à éviter des dégagements de produits gênants lors de l'ajout desdits alkoxysilanes au PVB, mais aussi de façon à rendre les alkoxysilanes plus réactifs. Un temps de trempage très court, par exemple de l'ordre de 1 seconde à 2 minutes pour des alkoxysilanes purs ou dilués est généralement suffisant pour obtenir un film intercalaire selon l'invention.

Un autre mode de réalisation du film intercalaire selon l'invention consiste à déposer par pulvérisation un léger voile de l'agent de réticulation pur ou dilué à la surface d'un film intercalaire de PVB plastifié courant. Selon un troisième mode de réalisation de la présente invention, il est également possible d'imprégner au rouleau la surface d'un film intercalaire de PVB plastifié courant, la solution d'imprégnation consistant en l'agent de réticulation pur ou dilué. Il est ainsi possible, comme illustré par les modes de réalisation précédemment mentionnés, de réaliser des films intercalaires selon l'invention de façon très simple à partir de films de PVB plastifié déjà existants, en traitant la surface desdits films.

L'ajout de l'agent de réticulation au PVB peut également se faire préalablement à la formation du film intercalaire selon l'invention comprenant ledit PVB, ce mode de réalisation étant cependant moins avantageux. Ainsi, les films intercalaires selon l'invention peuvent être obtenus par introduction de l'agent de réticulation dans de la poudre de PVB déjà plastifiée, ou simultanément ou encore préalablement à l'ajout de plastifiants au PVB, avant transformation dudit PVB en film intercalaire par extrusion ou par moulage selon des procédés connus en soi. Dans ce mode de réalisation, les conditions de transformation sont contrôlées (par exemple la température ou le taux de malaxage pour l'extrusion...) et l'agent de réticulation est choisi de façon à ne pas réagir avec le PVB plastifié dans les conditions de transformation utilisées. Dans ce cas, il est intéressant de choisir un agent de réticulation réagissant avec le PVB plastifié pour des températures supérieures à la température de ramollissement du PVB plastifié dans les conditions de pression utilisées et notamment supérieures à la température d'extrusion ou de pressage fixée, ou de choisir un agent de réticulation réagissant à partir de températures légèrement inférieures sans que la réaction soit néanmoins suffisante à ces températures pour rendre le PVB infusible ou très peu fusible, de façon à permettre la fonte ou la refonte du PVB plastifié pour son extrusion ou son pressage afin d'obtenir le film intercalaire recherché.

Il convient de remarquer que la présence ou l'ajout des plastifiants dans le PVB, ces plastifiants étant notamment les plastifiants traditionnellement utilisés pour « assouplir » le PVB, par exemple des adipates, des sebaçates ou des phtalates, ou encore des phosphates, qui n'ont pas de groupes hydroxyles résiduels, est normalement sans influence sur les réactions s'opérant dans le PVB du fait de la présence de l'agent de réticulation.

Les modes de réalisation du film intercalaire selon l'invention précédemment présentés sont bien sûr non exhaustifs. D'autres méthodes de mise au contact de l'agent de réticulation et du PVB utilisé pour faire les films intercalaires selon l'invention peuvent être envisagées et font partie de la présente invention.

Les films intercalaires selon l'invention permettent de réaliser les feuilletés, notamment les verres feuilletés, précédemment explicités dans la définition de l'invention. Les verres feuilletés comprennent au moins deux feuilles de verre et au moins un film intercalaire en PVB plastifié selon l'invention. Les feuilletés peuvent comprendre également plusieurs films intercalaires selon l'invention et/ou d'autres films intercalaires, en PVB ou non, tels qu'habituellement utilisés dans les feuilletés, et/ou peuvent comprendre au moins une feuille de matière inorganique en une matière autre que le verre, par exemple en pierre naturelle telle que le marbre ou le granit, ou en un matériau reconstitué. Les feuilletés selon l'invention présentent, comme illustré ci-après, une résistance accrue au feu par rapport aux feuilletés utilisant des films intercalaires traditionnels de PVB plastifié, ainsi qu'une résistance aux chocs similaire à celle desdits feuilletés traditionnels. Ils sont généralement aptes à résister à des températures allant jusqu'à 600°C environ sans écoulement du film intercalaire hors du feuilleté et avant décomposition dudit film. En outre, les verres feuilletés selon l'invention sont simples et économiques et permettent une bonne transmission de la lumière.

De préférence, l'agent de réticulation est choisi de façon à réagir sur le PVB plastifié à des températures supérieures à la température de ramollissement du PVB plastifié et notamment supérieures aux températures habituelles d'assemblage du PVB plastifié et des feuilles de matières inorganiques pour réaliser un feuilleté, ou à partir de températures légèrement inférieures sans que la réaction à ces températures soit suffisante pour rendre le PVB plastifié très peu fusible ou infusible, de façon à permettre la mise en oeuvre des films intercalaires dans les feuilletés selon des procédés habituels. L'assemblage du film intercalaire et des feuilles de matière inorganique pour donner des feuilletés peut alors se faire avec le film intercalaire de PVB plastifié ramolli dont la structure n'a pas encore été modifiée par l'agent de réticulation, dans les mêmes conditions que l'assemblage d'un film de PVB plastifié identique sans agent de réticulation. L'adhésion du PVB aux feuilles à son contact s'opère ainsi de façon traditionnelle par les groupements hydroxyles de surface du film de PVB et le film conserve les mêmes propriétés qu'un film de PVB plastifié normal telles qu'elles sont recherchées dans de telles applications, tant que la réaction de l'agent de réticulation sur le PVB plastifié n'a pas eu lieu de façon complète (c'est-à-dire n'a pas rendu le PVB infusible ou très peu fusible).

De préférence donc, dans le procédé de réalisation d'un feuilleté selon l'invention, le film intercalaire est assemblé aux feuilles de matière inorganique dans les conditions habituelles d'assemblage (températures généralement de l'ordre de 140°C) et avant que le PVB plastifié ne soit rendu très peu fusible ou infusible par l'action de l'agent de réticulation, l'action de l'agent de réticulation sur le PVB plastifié pouvant par exemple être déclenchée au plus tôt lors de l'assemblage du film intercalaire et des feuilles rigides sous l'effet de la chaleur ou pouvant être déclenchée ultérieurement, notamment lors d'un incendie.

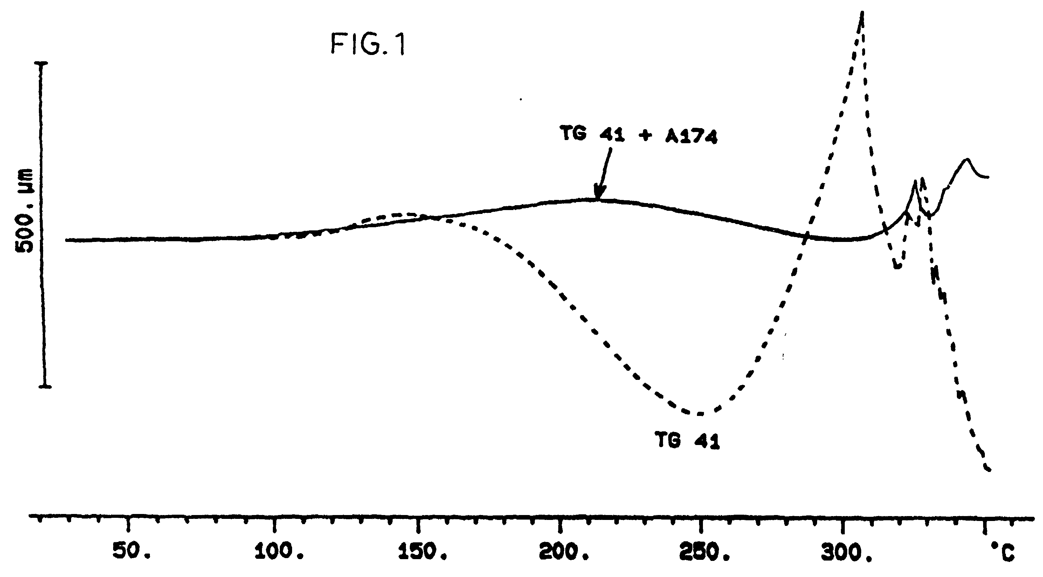

D'autres caractéristiques et avantages de l'invention apparaîtront dans les exemples suivants illustrant la présente invention sans la limiter et donnant des résultats obtenus en matière de résistance au feu en utilisant un film intercalaire selon l'invention, les résultats obtenus en utilisant un film intercalaire traditionnel étant parallèlement illustrés dans l'exemple comparatif. Le figure 1 jointe compare, comme explicité ultérieurement, les thermogrammes enregistrés dans le cas d'un film intercalaire selon l'invention et dans le cas d'un film intercalaire traditionnel.

### EXEMPLE 1

Selon cet exemple, un film intercalaire de PVB plastifié à 33 parties d'adipate de dihexyle pour 100 parties de résine commercialisé sous la référence « SAFLEX TG 41 » par la société MONSANTO et d'épaisseur approximative 760 µm est plongé dans un bain de gamma-méthacryloxypropyltriméthoxysilane pur ou dilué à 50 % dans de l'heptane, pendant 10 secondes à 2 minutes, pour obtenir un film intercalaire de PVB plastifié selon l'invention. Le film intercalaire obtenu est ensuite séché par soufflage d'air froid sec ou en étuve à 50°C.

Le film intercalaire ainsi réalisé est soumis à une analyse thermomécanique consistant à suivre l'enfoncement d'une pointe dans ledit film intercalaire en fonction de la température. Une telle analyse permet de vérifier si un polymère est fusible ou non et le thermogramme enregistré au cours de cette analyse permet de déterminer la température de ramollissement ou de fusion dudit polymère.

Le film intercalaire selon cet exemple conserve son intégrité jusqu'à des températures supérieures à 300°C avant de se décomposer aux alentours de 330°C. Le thermogramme correspondant est représenté en trait plein sur la figure 1 jointe et montre, après une légère dilatation du film, une sorte de ramollissement du film autour de 300°C juste avant sa décomposition. Le gamma-méthacryloxypropyl-triméthoxysilane utilisé est commercialisé sous la référence « A 174 » par la société UNION CARBIDE.

### EXEMPLE 2

Selon cet exemple, un film intercalaire de PVB plastifié est réalisé de la même façon que dans l'exemple 1 en trempant cette fois le film intercalaire de PVB plastifié non réticulé dans un bain de gamma-glycidoxypropyl-triméthoxysilane commercialisé sous la référence « A 187 » par la société UNION CARBIDE.

Le film intercalaire selon le présent exemple se caractérise par une température de décomposition supérieure à 300°C, ledit film conservant son intégrité jusqu'à sa température de décomposition.

### EXEMPLE 3

Selon cet exemple, un film intercalaire de PVB plastifié est réalisé de la même façon que dans l'exemple 1 en pulvérisant cette fois un léger voile de vinyltriméthoxyéthoxysilane sur le film intercalaire de PVB plastifié puis en étalant le voile déposé avec un chiffon.

Le film intercalaire selon le présent exemple se caractérise par une température de décomposition supérieure à 300°C, ledit film conservant son intégrité jusqu'à sa température de décomposition.

### EXEMPLE 4

Selon cet exemple, un film intercalaire de PVB plastifié est réalisé de la même façon que dans l'exemple 1 en trempant cette fois le film intercalaire de PVB plastifié dans un bain d'aminopropyltriéthoxysilane.

Le film intercalaire selon le présent exemple se caractérise par une température de décomposition supérieure à 300°C, ledit film conservant son intégrité jusqu'à sa température de décomposition.

### EXEMPLE 5

Selon cet exemple, un film intercalaire de PVB plastifié est réalisé de la même façon que dans l'exemple 1 en pulvérisant cette fois un léger voile de triméthoxysilyldiaminophenylhexyle sur le film intercalaire de PVB plastifié puis en étalant le voile déposé avec un chiffon.

Le film intercalaire selon le présent exemple se caractérise par une température de décomposition supérieure à 300°C, ledit film conservant son intégrité jusqu'à sa température de décomposition.

Le film intercalaire selon cet exemple est utilisé pour réaliser un verre feuilleté selon un procédé traditionnel, le verre feuilleté comprenant deux feuilles de verre entre lesquelles se trouve ledit film intercalaire et le collage du film intercalaire sur le verre étant effectué pendant la phase de traitement en autoclave du verre feuilleté à chaud et sous pression. Le verre feuilleté ainsi obtenu est mis dans un four à 600°C et son évolution en fonction de la température est suivie. A partir de 200°C, des bulles apparaissent dans le verre feuilleté sans qu'il y ait rupture des feuilles de verre ou écoulement du film intercalaire. A partir de 450°C, le film intercalaire à la périphérie du feuilleté en contact avec l'atmosphère du four jaunit et noircit mais ne s'enflamme pas. Après une heure à 600°C, le film intercalaire commence à disparaître peu à peu depuis la périphérie du feuilleté, en ne provoquant ni dégagement important de fumées ni coulures et tout en laissant une fine couche blanche de silice sur les feuilles de verre adjacentes.

Il convient de remarquer par ailleurs que le verre feuilleté obtenu dans cet exemple, tout comme les verres feuilletés obtenus de façon identique à partir des intercalaires décrits dans les exemples 1 à 4, présente des propriétés mécaniques similaires à celles d'un verre feuilleté traditionnel obtenu de façon identique à partir d'un intercalaire de PVB plastifié tel que décrit dans l'exemple comparatif. En outre, la réaction des alkoxysilanes sur le PVB ne perturbe pas la fabrication des feuilletés, cette réaction étant déclenchée au plus tôt lors de cette fabrication et n'étant pas complète avant la fin de cette fabrication.

### EXEMPLE COMPARATIF

Selon cet exemple, un film intercalaire de PVB plastifié à 33 parties d'adipate de dihexyle pour 100 parties de résine commercialisé sous la référence « SAFLEX TG 41 » par la société MONSANTO et d'épaisseur approximative 760 µm est soumis à une analyse thermomécanique. Ce film se caractérise par une température de ramollissement de l'ordre de 150°C. On observe que, sous l'effet de la chaleur, des petites bulles apparaissent en couvrant la totalité de la surface du film et que des fumées blanches se dégagent. Ce dégagement est suivi éventuellement d'un gonflement du produit avant jaunissement puis inflammation avant 250°C dudit produit avec fort dégagement de fumées noires et de chaleur. Le thermogramme correspondant est représenté en pointillés sur la figure 1 jointe.

Le film intercalaire selon cet exemple est ensuite utilisé pour réaliser un verre feuilleté de la même façon que dans l'exemple 5 puis le verre feuilleté obtenu est mis dans un four à 600°C et son évolution en fonction de la température est suivie. Dès 180-200°C, le film intercalaire s'écoule hors du feuilleté dans lequel une forte quantité de bulles apparaissent. Le film intercalaire jaunit fortement, noircit puis s'enflamme avec fort dégagement de chaleur et de fumées.

Les exemples précédents montrent ainsi la résistance améliorée au feu des films intercalaires selon l'invention. Ces films intercalaires peuvent être avantageusement utilisés dans la réalisation de vitrages feuilletés pour lesquels notamment aucun écoulement du PVB n'est à craindre en cas d'incendie. Il convient également d'insister sur le fait que la présente invention constitue, comme recherché, une solution simple et économique au problème d'écoulement des films intercalaires de PVB plastifié hors des verres, notamment et avantageusement des films intercalaires de PVB plastifié déjà existants et disponibles commercialement, en proposant des films intercalaires pouvant être directement réalisés à partir desdits films intercalaires déjà existants.

Les films intercalaires selon l'invention, notamment les films présentant une épaisseur de 0,38 mm ou 0,76 mm, peuvent être avantageusement utilisés dans la réalisation de vitrages feuilletés de bâtiment ou de vitrages feuilletés de véhicules de transport.

## Revendications

1. Procédé de fabrication d'un film intercalaire résistant au feu et destiné à la réalisation de feuilletés, selon lequel on dépose, à la surface d'un film de polyvinylbutyral plastifié, un agent de réticulation apte à rendre le polyvinylbutyral plastifié très peu fusible ou infusible.

2. Procédé selon la revendication 1, **caractérisé en ce que** le film de polyvinylbutyral plastifé est simplement trempé dans un bain de l'agent de réticulation, cet agent étant pur ou dilué.

3. Procédé selon la revendication 1, **caractérisé en ce que** l'agent de réticulation, pur ou dilué, est déposé par pulvérisation à la surface du film de polyvinylbutyral plastifié.

4. Procédé selon la revendication 1, **caractérisé en ce que** l'on imprègne au rouleau la surface du film de polyvinylbutyral plastifié, la solution d'imprégnation consistant en l'agent de réticulation pur ou dilué.

5. Film intercalaire en polyvinylbutyral plastifié, destiné à la réalisation de feuilletés, notamment de verres feuilletés, **caractérisé en ce qu'**il comprend un agent de réticulation apte à rendre le polyvinylbutyral plastifié très peu fusible ou infusible, cet agent étant choisi parmi les silanes hydrolysables possédant 2 ou 3 groupements alkoxy, à savoir les aminosilanes, les époxysilanes, les vinylsilanes, les phénylsilanes, les alkylsilanes, les bromosilanes et les phosphosilanes ou bien encore les tétraalkoxysilanes hydrolysables, les amines, les isocyanates bloqués et les époxy.

6. Film intercalaire selon la revendication 5, **caractérisé en ce que** l'agent de réticulation est le gamma-méthacryloxypropyltriméthoxysilane, le gamma-glycidoxypropyltriméthoxysilane, le vinyltriméthoxy-éthoxysilane, l'aminopropyltriéthoxysilane ou le triméthoxysilyldiaminophénylhexyle.

7. Feuilleté, en particulier verre feuilleté, comprenant au moins deux feuilles rigides de matière inorganique et au moins un film intercalaire selon l'une des revendications 5 ou 6.

8. Procédé de fabrication d'un feuilleté selon la revendication 7, **caractérisé en ce que** le film intercalaire est assemblé aux feuilles de matière inorganique avant que le polyvinylbutyral ne soit rendu très peu fusible ou infusible par l'action de l'agent de réticulation.

## Claims

1. Method of manufacturing a fire-resistant intermediate film intended for producing laminates, according to which there is deposited, on the surface of a film of plasticised polyvinyl butyral, a cross-linking agent able to make the plasticised polyvinyl butyral very difficult to melt or infusible.

2. Method according to Claim 1, **characterised in that** the film of plasticised polyvinyl butyral is simply soaked in a bath of the cross-linking agent, this agent being pure or dilute.

3. Method according to Claim 1, **characterised in that** the cross-linking agent, pure or dilute, is deposited by spraying on the surface of the plasticised polyvinyl butyral film.

4. Method according to Claim 1, **characterised in that** the surface of the plasticised polyvinyl butyral film is impregnated with a roller, the impregnation solution consisting of the pure or dilute cross-linking agent.

5. Plasticised polyvinyl butyral intermediate film, intended for producing laminates, notably laminated glasses, **characterised in that** it comprises a cross-linking agent able to make the plasticised polyvinyl butyral very difficult to melt or infusible, this agent being chosen from amongst the hydrolysable silanes having 2 or 3 alkoxy groups, namely the aminosilanes, epoxysilanes, vinylsilanes, phenylsilanes, alkylsilanes, bromosilanes and phosphosilanes, or the hydrolysable tetraalkoxylsilanes, amines, blocked isocyanates and epoxies.

6. Intermediate film according to Claim 5, **characterised in that** the cross-linking agent is gamma-methacryloxypropyltrimethoxylsilane, gamma-glycidoxypropyltrimethoxysilane, vinyltrimethoxy-ethoxysilane, aminopropyltriethoxysilane or trimethoxysilyldiaminophenylhexyl.

7. Laminate, in particular a laminated glass, comprising at least two rigid sheets of inorganic material and at least one intermediate film according to one of Claims 5 or 6.

8. Method of manufacturing a laminate according to Claim 7, **characterised in that** the intermediate film is assembled with the sheets of inorganic material before the polyvinyl butyral is made very difficult to melt or infusible by the action of the cross-linking agent.

## Patentansprüche

1. Verfahren zur Herstellung einer feuerfesten Zwischenfolie, die vorgesehen ist, für die Produktion von Verbunden verwendet zu werden, gemäß welchem auf die Oberfläche einer weichgemachten Polyvinylbutyralfolie ein Vernetzungsmittel aufgebracht wird, das in der Lage ist, das weichgemachte Polyvinylbutyral sehr wenig oder nicht schmelzbar zu machen.

2. Verfahren nach Anspruch 1, **dadurch gekennzeichnet, dass** die weichgemachte Polyvinylbutyralfolie einfach in ein Bad aus dem Vernetzungsmittel, das rein oder verdünnt vorliegt, getaucht wird.

3. Verfahren nach Anspruch 1, **dadurch gekennzeichnet, dass** das reine oder verdünnte Vernetzungsmittel durch Versprühen auf die Oberfläche der weichgemachten Polyvinylbutyralfolie aufgebracht wird.

4. Verfahren nach Anspruch 1, **dadurch gekennzeichnet, dass** die Oberfläche der weichgemachten Polyvinylbutyralfolie mit der Imprägnierlösung, die aus dem reinen oder verdünnten Vernetzungsmittel besteht, durch eine Walze imprägniert wird.

5. Zwischenfolie aus weichgemachtem Polyvinylbutyral, die für die Herstellung von Verbunden, insbesondere Verbundgläsern, vorgesehen ist, **dadurch gekennzeichnet, dass** sie ein Vernetzungsmittel umfasst, das in der Lage ist, das weichgemachte Polyvinylbutyral sehr wenig oder nicht schmelzbar zu machen und welches aus hydrolysierbaren Silanen mit 2 oder 3 Alkoxygruppen, nämlich Aminosilanen, Epoxysilanen, Vinylsilanen, Phenylsilanen, Alkylsilanen, Bromsilanen und Phosphorsilanen, oder auch aus hydrolysierbaren Tetraalkoxysilanen, Aminen, blockierten Isocyanaten und Epoxiden ausgewählt ist.

6. Zwischenfolie nach Anspruch 5, **dadurch gekennzeichnet, dass** das Vernetzungsmittel γ-Methacryloxypropyltrimethoxysilan, γ-Glycidoxypropyltrimethoxysilan, Vinyltrimethoxyethoxysilan, Aminopropyltriethoxysilan oder Trimethoxysilyldiaminophenylhexyl ist.

7. Verbund, insbesondere ein Verbundglas, der/das mindestens zwei starre Scheiben aus anorganischem Material und mindestens eine Zwischenfolie nach Anspruch 5 oder 6 umfasst.

8. Verfahren zur Herstellung eines Verbundes nach Anspruch 7, **dadurch gekennzeichnet, dass** die Zwischenfolie mit Scheiben aus anorganischem Material assembliert wird, bevor das Polyvinylbutyral durch die Einwirkung des Vernetzungsmittels sehr wenig oder nicht schmelzbar gemacht wird.
